# EUROPEAN PATENT APPLICATION

(11) **EP 1 935 534 A1**
(43) Date of publication of application: **25.06.2008**
(21) Application number: 05793319.4
(22) Date of filing: 16.09.2005
(51) Int. Cl.: B22D 17/20, B29C 45/50, B29C 45/53

(54) **MECHANISM FOR INJECTING MATERIAL INTO A MOULD FOR AN INJECTION MACHINE**

(71) Applicant: Urpemak, SL, 29750 Zumaia (Guipuzcoa) (ES)
(72) Inventor: RUIZ DE ARGANDOÑA ARZALLUS, Ismael, E-20730 Azpeitia (ES); EGAÑA FARIZO, Fernando, E-20001 Donostia (ES); OSORO ETXANIZ, Jon, E-20720 Azkoitia (ES); ZATARAIN GORDOA, Mikel, E-20007 Donostia (ES)
(74) Representative: Urteaga Simarro, José Antonio
(86) International application number: PCT/ES2005/000504
(87) International publication number: WO 2007/034002

(57) **Abstract**

Injection mechanism (1) for injecting material into a mould for injection moulding machines, wherein the injection mechanism (1) comprises a transmission mechanism (2) for transmitting movement between an electrical motor and a ram (5). The transmission mechanism (2) new and inventive in the fact that it presents an approximately constant transmission ratio and in that it is formed of a geometry that comprises a mobile polygon (3) consisting of at least three mobile articulated vertices (13, 14, 15), with a pusher segment (11), which transfers the movement from the motor to the ram (5) efficiently, extending from one of these vertices (15). In addition, the injection mechanism (1) includes an overpressure-limiting device (24) based on the use of gas cylinders (27).

## Description

### Technical field

The invention relates to an injection mechanism for an injection moulding machine.

### Prior art

Injection moulding machines manufacture parts of all types and materials by injecting the material into a mould in order to mould parts, and subsequently solidify and extract the parts from the mould. In order to carry out these actions, injection machines comprise a variety of mechanisms, including the injection mechanism, which is responsible for injecting or introducing the material from an oven or another source to the aforementioned mould.

Injection mechanisms normally comprise a hydraulic drive ram that pushes the material from the oven or another source to the mould, and a drive mechanism (hydraulic mechanism, electric motor, etc.). The capacity of injection mechanisms is essentially determined by the velocity and force parameters of the movement of the ram, and therefore by the velocity and force applied on the material during injection. Thus, the performance and operation of the injection mechanisms is characterised by velocity/time and force/time curves or graphs that represent the evolution of the velocity and the force of the ram during the time that an injection lasts. The force/velocity profile can be broken down into various phases: in a first phase, the ram must be displaced at a low but increasing velocity and force until the material reaches the opening of the mould; in a second phase, the velocity and force must be increased in order to fill the mould feeder channels and force the material to the opening of the part-forming cavities in the mould; in a third phase or filling phase, by keeping the velocity high and relatively constant, the cavities are filled; in a fourth phase or braking phase, the velocity of the ram is reduced sharply, and at the same time the force exerted by the ram begins to increase; in a fifth phase or compacting phase, the ram applies a high force at a reduced velocity in order to compact the material in the cavities; in a sixth phase, the ram returns to its initial position.

Traditionally the injection mechanism of injection moulding machines has operated with hydraulic-driven mechanisms, although electrically-driven injection mechanisms are also known. Said electrically driven injection mechanisms normally comprise, besides the ram that pushes the material towards the mould, an electrically driven motor and a transmission mechanism which transmits the movement of the motor to the ram.

The development of the art towards electrically-driven elements, although interesting for various reasons such as that of increasing the operating precision of the mechanism, facilitating its maintenance and cleaning, eliminating the use of oils and thereby reducing the environmental impact, reducing the size of the mechanism, reducing the number of components and simplifying the assembly, therefore reducing the cost of the mechanism, has not taken place at the expected pace due to the fact that the electrically-driven elements designed to date have not been able to provide the injection mechanism with the same force and velocity curves or performance as those provided by hydraulically-driven elements. It must be taken into account that the hydraulically-driven mechanisms benefit from the storage of energy in hydropneumatic accumulators, which means that these mechanisms are capable of supplying very high power levels in short timespaces. In contrast, servo-controlled electrically-driven elements cannot benefit from this accumulation of energy in order to dispense high energy instantaneously. As a consequence, servo-controlled drive elements must be over-dimensioned so that they are capable of delivering the maximum power required at any moment, leading to the fact that these drive elements must include motors of a much larger size than those required by traditional hydraulically driven mechanisms.

Given that the force and velocity profiles or graphs do not reach maximum values at the same time, it could be deemed possible to reduce the size of the required drive motor if a transmission mechanism boasting a different transmission ratio at the points of maximum force and maximum velocity were used. At the points of maximum force a short transmission would be used and a long transmission at the points of maximum velocity. However, depending on the mould that the injection mechanism has to fill, the points of maximum force and maximum velocity are highly variable, and it is therefore necessary to have the maximum force and the maximum velocity available at all positions along the ram stroke. Because of this, it is not possible to use optimised transmission mechanisms with a variable transmission ratio, and it is preferable to use transmission mechanisms with a constant transmission ratio.

An example of a transmission mechanism with a constant transmission ratio is a rack and pinion system, which in practice involves a limitation of the maximum transmissible force due to the high forces that appear on the lines of contact between the cogs that make up the rack and pinion.

Another example of a transmission mechanism, applied to injection mechanisms in order to transmit movement from the motor to the injection cylinder, is that detailed in the document WO-0072998-A1. This transmission mechanism is based on the use of a cam and does not have a constant transmission ratio, but rather the transmission ratio varies with the position of the cam following an approximately sinusoidal law. Subsequently, depending on the volume of material to be injected in the mould, the injection mechanism may suffer a lack of force or velocity that would not occur if, with the same drive motor, a transmission mechanism with a constant transmission ratio were used. Furthermore, another drawback of the cam transmission mechanism is that the connecting rod is not constantly aligned with the injection ram, which gives rise to lateral stresses on the injection ram and to possible wear caused by said ram rubbing against the cylinder.

Another aspect to point out with regard to injection mechanisms is the overpressure-limiting device, an element whose function it is to eliminate or filter a pressure surge produced during the braking phase, in which, with the mould having already been filled, the inertia of the drive mechanism tends to continue pushing the injected material and gives rise to a high instantaneous pressure. Said pressure surge, if it is not eliminated, may cause the injection of an excess of material and lead to the mould opening and a fine film of material forming between the parts. The overpressure-limiting device is an element that complements the connection between the transmission mechanism and the ram, and is traditionally formed in the shape of a spring that allows the drive mechanism to continue advancing without giving rise to a high instantaneous force even when the mould has already been filled.

It is an object of the invention to design an injection moulding mechanism that presents an electrically-driven element and the advantages deriving from the use of an electrically-driven element, and which at the same time presents a performance comparable to that of hydraulically-driven mechanisms.

It is an object of the invention that said injection mechanism presents an electrically-driven element with a constant or virtually constant transmission ratio, so that the ram, at any point of its stroke, can ideally be provided with all its force and velocity capacity. At the same time, the electrically-driven element must be capable of developing high injection forces, greater than those developed by rack mechanisms.

### Detailed description of the invention

In order to achieve the objectives above, the invention defines an injection mechanism that comprises an electrically-driven motor, a ram that pushes the material towards the mould, and a transmission mechanism for transmitting the movement of the motor to the ram, with the innovative aspect of the invention centring on the definition of the transmission mechanism and the definition of the overpressure-limiting device.

The transmission mechanism presents a constant transmission ratio throughout its stroke, where the 'stroke' is understood to be the range of rotation of the motor and of longitudinal movement of the ram comprised between an initial position of the motor and the ram and a final position of the motor and the ram, in which the ram is positioned further away and closer to the mould respectively.

The transmission mechanism comprises various levers and other elements distributed inside a receptacle, where said levers rotate in relation to others according to an articulated geometric arrangement that combines fixed vertices and articulated vertices, and whose function it is to convert the rotary movement of the motor into a longitudinal movement of the ram in the most efficient way possible, with the transmission ratio (ratio between the angle rotated by the motor and the distance travelled by the ram) being approximately constant. In addition, the design of the transmission mechanism is such that the movement of the drive mechanism can be transmitted to the ram by a connecting rod that performs its stroke in alignment in relation to the movement of the ram, preventing the appearance of lateral stresses on the ram. The geometric arrangement of the elements that make up the transmission mechanism is specified in the detailed description of the drawings.

In addition, the overpressure-limiting device comprised in the inventive injection mechanism behaves in such a way that it is rigid during the filling phase, and at the same time it is capable of distorting itself to provide the drive mechanism with space to reduce its own inertia without producing high instantaneous stresses that may lead to the mould opening and the appearance of fine film of material between the parts. To achieve this, the overpressure-limiting device is based on the use of gas cylinders, that keep the pressure of a hydraulic ram constant. The ram is constantly in a position of total extension and, as a consequence, behaves as a totally rigid system, except when the force applied is greater than its preload force (or the result of multiplying the hydraulic pressure by the ram area). In the event that the force exceeds the preload, the ram acquires a contraction movement that prevents the sudden increase in the transmitted force, thereby enabling the drive mechanism to brake its speed without causing excess pressure. The specific embodiment of the overpressure-limiting device is explained in detail in the description of the drawings.

### Description of the drawings

The details of the invention can be seen in the drawings attached:
- Figure 1 shows the geometric representation of the transmission mechanism comprised in the inventive injection mechanism.
- Figure 2 shows the geometric representation of the transmission mechanism of Figure 1 in its initial position and in its final position.
- Figure 3 shows the injection mechanism of the preceding figure without the cover.
- Figure 4 shows the inventive overpressure.limiting device.

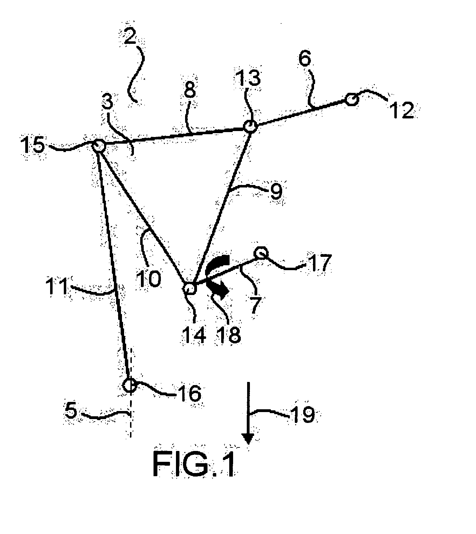

Figure 1 shows the arrangement or geometric representation of the transmission mechanism (2) comprised in the inventive injection mechanism (1). The transmission mechanism (2) converts the rotary movement (18) of a drive element (7) that rotates on the spin axis (17) of the motor into a longitudinal movement (19) of the ram (5) of the injection mechanism (1). To achieve this, the geometric representation of the transmission mechanism (2) comprises a mobile polygon (3) with three mobile sides (8, 9, 10) and three mobile articulated vertices (13, 14, 15). A first mobile articulated vertex (14) connects the mobile sides (9, 10) to the drive element (7). A second mobile articulated vertex (13) connects the mobile sides (8, 9) to a rotary segment (6) which is in turn connected at its other end, by means of a fixed articulated joint (12), to the receptacle that houses the transmission mechanism (2) or to any fixed element. A third mobile articulated vertex (15) connects the mobile sides (8, 10) to a pusher segment (11), which is in turn connected to the ram (5) by means of a mobile articulated joint (16).

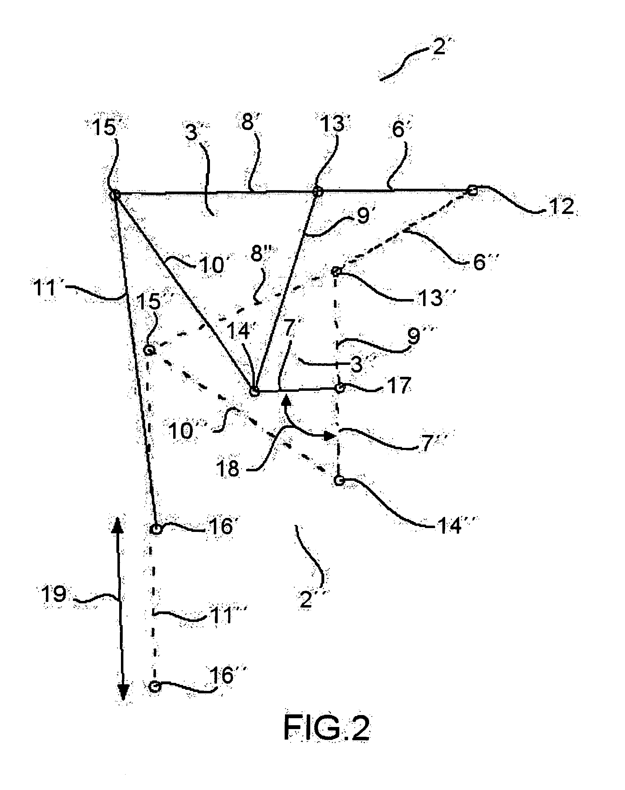

Figure 2 shows the geometric representation of the transmission mechanism (2) according to the invention in its initial position (2') and in its final position (2"). The representation also includes all the elements equally represented in their initial and final positions, maintaining their reference numbers plus a single apostrophe to identify their initial positions and two apostrophes to identify their final positions. This figure also shows how the rotary movement (18) of the drive element (7) between its initial position (7') and final position (7") is translated into a longitudinal movement (19) of the mobile articulated joint (16) between its initial position (16') and final position (16"). To achieve this, the mobile polygon (3) operates so that the rotation of the drive element (7) in relation to the spin axis (17) is translated into a rotation of the rotary segment (6) in relation to the fixed articulated joint (12) and into a virtually vertical movement of the mobile articulated vertex (15). The movement of the mobile articulated vertex (15) is translated into a movement of the pusher segment (11) and into a longitudinal movement (19) of the mobile articulated joint (16) and the ram (5), with the specific feature that due to the fact that the movement of the mobile articulated vertex (15) is almost vertical, the transference of its movement to the mobile articulated joint (16), which must be displaced vertically, is very efficient.

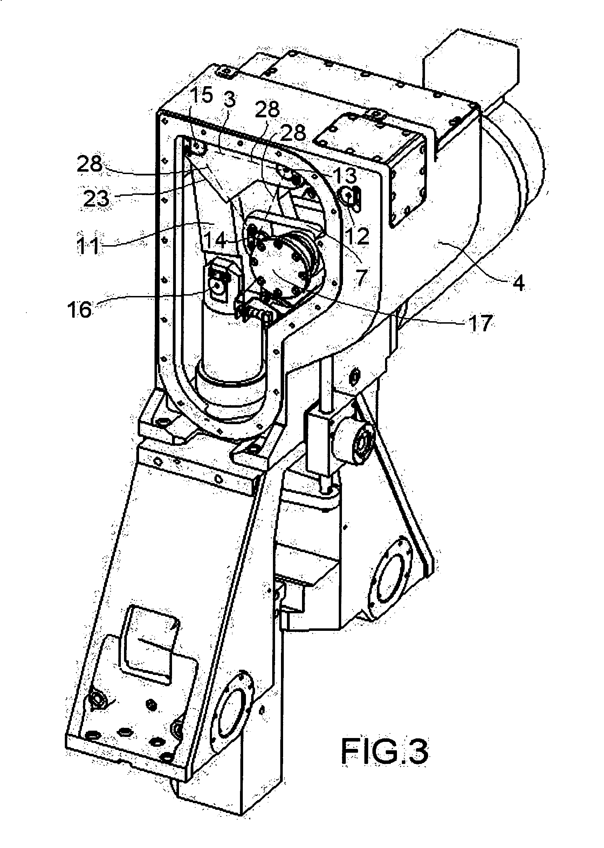

Figure 3 shows an example of a physical embodiment of the transmission mechanism (2) represented geometrically in Figure 1. In said example, the drive element (7) is a lever that rotates in relation to the spin axis (17). The rotary segment (6), not shown, rotates in relation to the fixed articulated joint (12) connected to the receptacle (4). The pusher segment (11) pushes the ram (5), which is not shown. The mobile polygon (3) is made up of the imaginary lines (28) that connect the mobile articulated vertices (13, 14, 15) present in an approximately T-shaped part (23), represented partially.

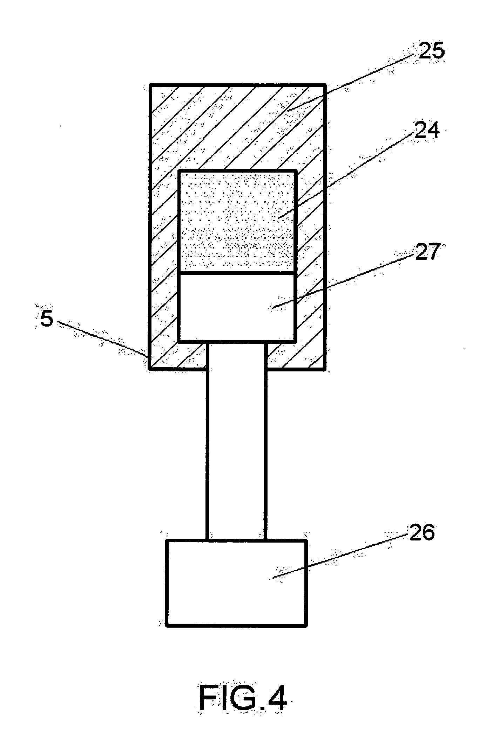

Figure 4 shows the overpressure-limiting device (24). The ram (5) comprises a top part (25) closer to the transmission mechanism and upon which the pusher segment (11) of said mechanism acts, and a bottom part (26) that pushes the material to inject it into the mould. Both parts (25, 26) are coupled together by means of a gas cylinder (27) whose function it is to limit the pressure surge or peak. In normal conditions, when the drive mechanism pushes the top part (25) of the ram (5), the said top part (25), the gas cylinder (27) and the bottom part (26) of the ram (5) move in conjunction with each other like a single part and apply pressure on the material. Once the compacting phase has been completed and the braking phase begins, the bottom part (26) displays a resistance to advancing due to the fact that the material is compacted. As a result, when the pressure surge of the top part (25) occurs, the gas cylinder (27) acts and absorbs and cushions said pressure surge, reducing its effect on the bottom part (26).

## Claims

1. Injection mechanism (1) for injecting material into a mould, wherein the injection mechanism (1) comprises a transmission mechanism (2) that converts the rotary movement (18) of a drive element (7) that rotates around a spin axis (17) driven by a drive mechanism into a longitudinal movement (19) of a ram (5) that exerts pressure on the material in order to inject the material into the mould, **characterised in that**:
- the transmission mechanism (2) presents a geometric arrangement that comprises a mobile polygon (3) formed of at least three mobile sides (8, 9, 10) and at least three mobile articulated vertices (13, 14, 15), where the mobile articulated vertex (14) connects the mobile sides (9, 10) to the drive element (7), the mobile articulated vertex (13) connects the mobile sides (8, 9) to one end of the rotary segment (6), which in turn is connected by its other end and by means of a fixed articulated joint (12) to a fixed element, where the mobile articulated vertex (15) connects the mobile sides (8, 10) with a pusher segment (11), which is connected in turn to a ram (5) by means of a mobile articulated joint (16),
- the rotary movement (18) of the drive element (7) in relation to the spin axis (17) is translated into a rotation of the rotary segment (6) in relation to the fixed articulated joint (12) and into a substantially vertical movement of the mobile articulated vertex (15), with the substantially vertical movement of the mobile articulated vertex (15) being translated into a movement of the pusher segment (11) and into a longitudinal movement (19) of the mobile articulated joint (16) and the ram (5).

2. Injection mechanism (1) for injecting material into a mould, according to claim 1, wherein the mobile polygon (3) is a triangle, having three mobile sides (8, 9,10) and three mobile articulated vertices (13, 14, 15).

3. Injection mechanism (1) for injecting material into a mould, according to claim 1, wherein the rotary segment (6) and the pusher segment (11) take the form of levers or connecting rods, and the mobile polygon (3) is made up of the imaginary lines (28) that connect the mobile articulated vertices (13, 14, 15) present in an approximately T-shaped part (23).

4. Injection mechanism (1) for injecting material into a mould, according to claims 1 or 3, wherein the transmission mechanism (2) is housed inside a receptacle (4), with said receptacle (4) or a part connected to the receptacle (4) being the fixed element to which the end of the rotary segment (6) is connected.

5. Injection mechanism (1) for injecting material into a mould, according to claims 1, 3 or 4, wherein the injection mechanism (1) comprises an overpressure-limiting device (24), where the overpressure-limiting device (24) comprises a gas cylinder (27) disposed between a top part (25) of the ram (5), upon which the pusher segment (11) of the transmission mechanism (2) acts, and a bottom part (26) of the ram (5), said bottom part (26) having the function of exerting pressure on the material.
